(19) Europäisches Patentamt
European Patent Office
Office européen des brevets

(11) EP 3 444 586 A1

(12) EUROPEAN PATENT APPLICATION
published in accordance with Art. 153(4) EPC

(43) Date of publication:
**20.02.2019 Bulletin 2019/08**

(21) Application number: **17782365.5**

(22) Date of filing: **10.04.2017**

(51) Int Cl.:
***G01M 17/02*** *(2006.01)* ***B60C 19/00*** *(2006.01)*

(86) International application number:
**PCT/JP2017/014720**

(87) International publication number:
**WO 2017/179552 (19.10.2017 Gazette 2017/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.04.2016 JP 2016082199**

(71) Applicant: **Kabushiki Kaisha Kobe Seiko Sho (Kobe Steel, Ltd.)**
**Kobe-shi, Hyogo 651-8585 (JP)**

(72) Inventor: **OKADA, Toru**
**Hyogo 651-2271 Japan (JP)**

(74) Representative: **TBK**
**Bavariaring 4-6**
**80336 München (DE)**

# (54) DEVICE AND METHOD FOR EVALUATING ROLLING RESISTANCE OF TIRE

(57) Rolling resistance is appropriately and easily evaluated at an arbitrary temperature of a tire. When a phase difference (a phase difference between a load applied to the tire and a variation in position of the drum) is derived for a reference tire, the phase differences δ are derived at a plurality of temperatures within a range from an initial temperature to an atmospheric temperature in a process in which a temperature of the reference tire that reached the initial temperature higher or lower than the atmospheric temperature by heating or cooling approaches the atmospheric temperature from the initial temperature (S2 toS7 to S9: YES to S7, or the like). The phase difference corresponding to a temperature of a tire to be evaluated among the phase differences δ derived for the reference tire at the plurality of temperatures and the phase difference derived for the tire to be evaluated are compared, thereby evaluating rolling resistance of the tire to be evaluated.

*FIG.4*

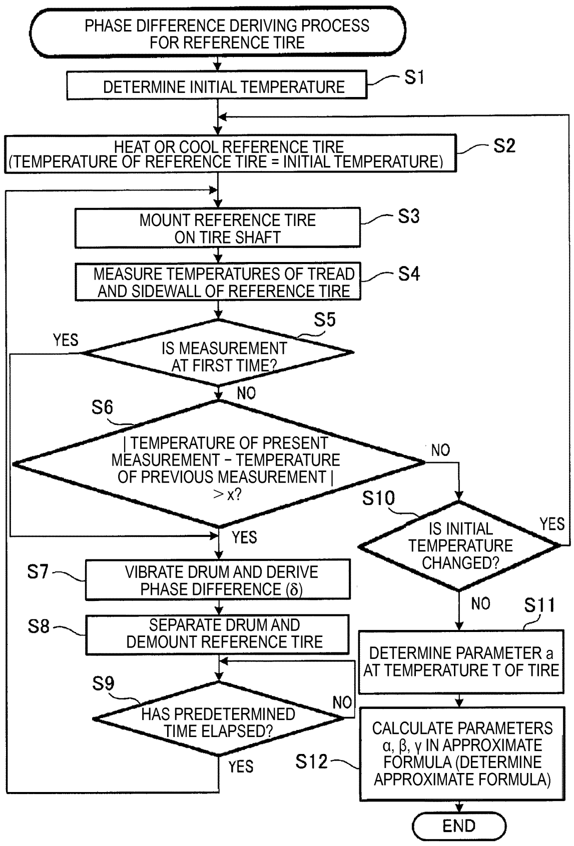


EP 3 444 586 A1

## Description

TECHNICAL FIELD

The present invention relates to a device and a method of evaluating rolling resistance of a tire.

BACKGROUND ART

One of important evaluation items regarding performance of a tire used in vehicles (trucks, passenger cars and the like) is rolling resistance. The rolling resistance is a tangential force generated between a tire and a road surface when the tire is rolled on the road surface, and a measuring method thereof is defined in JIS D 4234 (passenger car, truck and bus tires - methods of testing rolling resistance, 2009).

In the measuring method defined in JIS D 4234, a running-in operation needs to be performed for 30 minutes or more to stabilize a temperature of the tire prior to the measurement, and it takes time to perform the measurement. Thus, in Patent Document 1, a proposal is made to predict the rolling resistance using a characteristic value correlating with the rolling resistance instead of measuring the rolling resistance according to the measuring method defined in JIS D 4234.

Specifically, in Patent Document 1, considering that the rolling resistance is caused by energy loss by deformation of the tire during the rolling and has a high correlation with an attenuation characteristic of rubber of the tire, a proposal is made to predict the rolling resistance using tan δ (where δ is a phase difference between a variation in load applied to the tire and a variation in position of a drum, which are caused by vibrating the drum) that indicates the attenuation characteristic as the characteristic value. In Patent Document 1, when the phase difference is previously derived using a reference tire, and a difference between a phase difference of the reference tire and a phase difference of a tire to be evaluated is no less than an allowable range, it is evaluated that the rolling resistance of the tire to be evaluated is abnormal.

CITATION LIST

PATENT DOCUMENT

[Patent Document 1]: Japanese Unexamined Patent Application Publication No. 2015-232545

SUMMARY OF THE INVENTION

PROBLEMS THAT THE INVENTION IS TO SOLVE

The rolling resistance is greatly changed depending on a temperature of the tire. In this regard, it is defined in JIS D 4234 that the measurement is performed in a range of an atmospheric temperature of 20°C or higher and 30°C or lower, and the measured result is corrected to a value obtained based on the atmospheric temperature of 25°C by the following correction formula.

$$F_{t25} = F_t \cdot [1 + K_t \cdot (t_{amb} - 25)]$$

($F_{t25}$: rolling resistance (N), $t_{amb}$: atmospheric temperature (°C), and Kt: temperature correction coefficient)

In Patent Document 1 (paragraph 0045), a proposal is made to check an influence which a temperature (an atmospheric temperature) of a measuring environment exerts on the measured result of the phase difference in advance, and to prepare a correction formula (a temperature correction function) for correcting tan δ (for example, to change a temperature (an atmospheric temperature) of a measuring environment of a rolling resistance testing device and to measure tan δ of the reference tire in a wide temperature range in advance).

However, the correction formula defined in JIS D 4234 is based on the assumption that the atmospheric temperature is in a range of 20°C or higher and 30°C or lower, and cannot be applied to a case in which the atmospheric temperature is lower than 20°C or exceeds 30°C. Since the temperature correction coefficient Kt is different depending on a type of the tire, a correction error increases at a temperature having a big difference from 25°C.

As in Patent Document 1 (paragraph 0045), when tan δ of the reference tire is measured by changing the atmospheric temperature, the atmospheric temperature (an indoor temperature) needs to be changed on each measurement. A process of changing the atmospheric temperature is not easy, and it takes time to do a series of measurement work.

A purpose of the present invention is to provide a device and a method of evaluating rolling resistance of a tire, capable of properly and easily evaluating the rolling resistance at an arbitrary temperature of the tire.

MEANS FOR SOLVING THE PROBLEMS

A device for evaluating rolling resistance of a tire according to the present invention includes: a pressurizing member having a surface that simulates a road surface on which the tire is rolled; a moving mechanism for alternately moving the pressurizing member in an approaching direction that is a direction moving toward the tire and in a separating direction that is a direction moving away from the tire; a load sensor for detecting a load applied to the tire in a state where the surface of the pressurizing member contacts with the tire; a position sensor for detecting positions of the pressurizing member in directions that are the approaching direction and the separating direction; a phase difference derivation unit for controlling the moving mechanism such that the load applied to the tire is changed, and deriving a phase difference between a variation in the load and a variation in the position of the pressurizing member based on signals from the load sensor and the position sensor; and a rolling resistance evaluation unit for comparing the phase difference derived for a reference tire by the phase difference derivation unit and the phase difference derived for a tire to be evaluated by the phase difference derivation unit, and evaluating rolling resistance of the tire to be evaluated, wherein when the phase difference is derived for the reference tire, the phase difference derivation unit derives the phase differences at a plurality of temperatures within a range from an initial temperature to an atmospheric temperature while a temperature of the reference tire that reached the initial temperature higher or lower than the atmospheric temperature by heating or cooling approaches the atmospheric temperature from the initial temperature, and the rolling resistance evaluation unit compares the phase difference corresponding to a temperature of the tire to be evaluated among the phase differences derived for the reference tire by the phase difference derivation unit at the plurality of temperatures and the phase difference derived for the tire to be evaluated by the phase difference derivation unit, and evaluates the rolling resistance of the tire to be evaluated.

A method of evaluating rolling resistance of a tire according to the present invention is a method of evaluating rolling resistance of a tire using a device for evaluating rolling resistance of a tire including: a pressurizing member having a surface that simulates a road surface on which the tire is rolled; a moving mechanism for alternately moving the pressurizing member in an approaching direction that is a direction moving toward the tire and in a separating direction that is a direction moving away from the tire; a load sensor for detecting a load applied to the tire in a state where the surface of the pressurizing member contacts with the tire; and a position sensor for detecting positions of the pressurizing member in directions that are the approaching direction and the separating direction, the method including: a phase difference deriving step for controlling the moving mechanism such that the load applied to the tire is changed, and deriving a phase difference between a variation in the load and a variation in the position of the pressurizing member based on signals from the load sensor and the position sensor; and a rolling resistance evaluating step for comparing the phase difference derived for a reference tire in the phase difference deriving step and the phase difference derived for a tire to be evaluated in the phase difference deriving step, and evaluating rolling resistance of the tire to be evaluated, wherein in the phase difference deriving step for the reference tire, the phase differences are derived at a plurality of temperatures within a range from an initial temperature to an atmospheric temperature while a temperature of the reference tire that reached the initial temperature higher or lower than the atmospheric temperature by heating or cooling approaches the atmospheric temperature from the initial temperature, and in the rolling resistance evaluating step, the phase difference corresponding to a temperature of the tire to be evaluated among the phase difference derived at the plurality of temperatures during the phase difference deriving step for the reference tire is compared with the phase difference derived during the phase difference deriving step for the tire to be evaluated to evaluate the rolling resistance of the tire to be evaluated.

According to the invention, when the phase difference (the phase difference between a load applied to the tire and a variation in position of the pressurizing member) is derived for the reference tire, the phase differences are derived at the plurality of temperatures within the range from the initial temperature to the atmospheric temperature while the temperature of the reference tire that reached the initial temperature higher or lower than the atmospheric temperature by heating or cooling approaches the atmospheric temperature from the initial temperature. The phase difference corresponding to the temperature of the tire to be evaluated among the phase differences derived for the reference tire at the plurality of temperatures and the phase difference derived for the tire to be evaluated are compared, and the rolling resistance of the tire to be evaluated is evaluated. Thereby, the rolling resistance can be adequately evaluated even at a temperature at which a difference from 25°C is large. The rolling resistance can be easily evaluated when comparing to the case in which the process of changing the atmospheric temperature is required. That is, according to the invention, the rolling resistance can be appropriately and easily evaluated at an arbitrary temperature of the tire.

In the evaluating device according to the invention, when the phase difference is derived for the reference tire, the initial temperature may be changed, and the phase difference derivation unit may derive the phase differences at the plurality of temperatures while the temperature of the reference tire approaches the atmospheric temperature from each of the initial temperatures. In this case, an influence of the initial temperature on the phase difference can be recognized by changing the initial temperature to derive the phase difference in the plurality of steps, the phase difference of the reference tire having a small variation excluding the influence of the initial temperature can be derived.

In the evaluating device according to the invention, when the phase differences are derived for the reference tire at the plurality of temperatures, the phase difference derivation unit may control the moving mechanism such that the load applied to the reference tire is changed when the phase difference is derived at each of the plurality of temperatures in a state where the pressurizing member contacts with the reference tire, and control the moving mechanism such that the pressurizing member moves away from the reference tire before the phase difference is derived at a first temperature that is one of the plurality of temperatures, and then the phase difference is derived at a second temperature that is one of the plurality of temperatures and is different from the first temperature. When the tire and the pressurizing member are maintained in a contact state, a temperature of a surface of a portion of the tire which contacts with the pressurizing member tends to be different from a temperature of the inside (the rubber portion) of the tire because heat of the pressurizing member enters and leaves the surface. In this case, when the temperature of the surface of the tire is measured, the measured temperature can be different from the temperature of the inside of the tire. When the tire keeps rotating in the state in which the tire and the pressurizing member contact with each other, the temperature of the tire rises. Thus, when the phase difference is derived while the initial temperature is set to a temperature higher than the atmospheric temperature and the temperature of the reference tire is lowered from the initial temperature toward the atmospheric temperature, a problem that the temperature of the reference tire is not easily lowered may occur. According to the above configuration, the pressurizing member moves away from the reference tire before and after the phase difference is derived at each temperature. Thereby, the measured temperature of the reference tire can be inhibited from being affected by the temperature of the pressurizing member, and the above problem can be avoided by preventing a rise in the temperature of the reference tire.

The evaluating device according to the invention may further include an approximate formula determination unit configured to determine an approximate formula illustrating a relationship between the phase difference and a temperature of the tire based on the phase differences derived for the reference tire by the phase difference derivation unit at the plurality of temperatures. The rolling resistance evaluation unit may compare the phase difference obtained by applying the temperature of the tire to be evaluated to the approximate formula determined by the approximate formula determination unit and the phase difference derived for the tire to be evaluated by the phase difference derivation unit, and evaluate the rolling resistance of the tire to be evaluated. In this case, the phase difference obtained by applying the temperature of the tire to be evaluated to the previously determined approximate formula is compared with the phase difference derived for the tire to be evaluated, thereby easily evaluating the rolling resistance.

In the evaluating device according to the invention, the approximate formula determination unit may use Formula (1) below as the approximate formula, and calculate parameters in Formula (1) based on the phase differences derived for the reference tire by the phase difference derivation unit at the plurality of temperatures to determine the approximate formula.

$$\delta = \alpha \cdot \exp(-\gamma \cdot T) + \beta \qquad (1)$$

($\delta$: phase difference (°), $\alpha$, $\beta$ and $\gamma$: parameters, T: temperature (°C) of the tire)

As described below, in the approximate formula in which the phase difference $\delta$ is expressed by a logarithmic function of the temperature T of the tire, an error between the derived phase difference and the phase difference from the approximate formula is large in a high-temperature region of 40°C or higher. In contrast, according to the approximate formula in which the phase difference $\delta$ is expressed by an exponential function of the temperature T of the tire as in Formula (1) above, an error between the derived phase difference $\delta$ and the phase difference from the approximate formula is small from a low-temperature region to the high-temperature region of 40°C or higher. According to Formula (1) above, since only three parameters called $\alpha$, $\beta$ and $\gamma$ are calculated and stored, it is possible to shorten the time required for the calculation and reduce a capacity of the memory.

The evaluating device according to the invention may at least use a temperature of a tread of the tire as the temperature of the tire. The tread has larger thickness and higher resistance to deformation than the sidewall, and has a great contribution to energy loss of the tire. According to the above configuration, since the temperature of the tread is at least used as the temperature of the tire, there is a high possibility to derive a temperature characteristic of the phase difference (a characteristic of the phase difference corresponding to the temperature of the tire) with a high accuracy.

The evaluating device according to the invention may use the temperature of the tread of the tire and a temperature of a sidewall of the tire as the temperature of the tire. In this case, both the temperature of the tread and the temperature of the sidewall are used, and, therefore, the temperature of the tire can be more flexibly set.

The evaluating device according to the invention may use a temperature T expressed by Formula (2) below as the temperature of the tire.

$$T = a \cdot T_S + (1 - a) \cdot T_T \qquad (2)$$

($T_S$: temperature (°C) of the sidewall of the tire, $T_T$: temperature (°C) of the tread of the tire, and a: parameter)

In this case, the temperature of the tire can be more commonly set.

In the evaluating device according to the present invention, the phase difference derivation unit may control the moving mechanism such that the load applied to the tire is changed in a state where rotation of the tire is maintained, and derive the phase difference based on the signals from the load sensor and the position sensor. In this case, an average phase difference of the tire in a circumferential direction can be derived.

The evaluating device according to the present invention may be a tire uniformity machine that performs a tire uniformity test for inspecting uniformity of the tire in a circumferential direction. In a tire uniformity machine that tests a total number of tires, the temperature of the tire as well as the atmospheric temperature are not easily controlled to 20°C or higher and 30°C or lower, and temperature control is not generally performed, so that the temperature of the tire immediately after vulcanization may reach 50°C. However, according to the present invention, since the rolling resistance can be appropriately and easily evaluated at an arbitrary temperature of the tire, this is also effective for the tire uniformity machine.

In the evaluating device according to the present invention, the phase difference derivation unit may derive the phase difference after the tire uniformity test is performed on the tire to be evaluated. In this case, since the characteristics of the rubber of the tire are stable after the tire uniformity test is performed, the test can also be performed on any tire under the same conditions, and accuracy of the evaluation of the tire can be enhanced.

## ADVANTAGES OF THE INVENTION

According to the present invention, when a phase difference (a phase difference between a load applied to the tire and a variation in position of the pressurizing member) is derived for a reference tire, the phase differences are derived at a plurality of temperatures within a range from an initial temperature to an atmospheric temperature in a process in which a temperature of the reference tire, which reaches the initial temperature higher or lower than the atmospheric temperature by heating or cooling, approaches to the atmospheric temperature from the initial temperature. The phase difference corresponding to a temperature of a tire to be evaluated among the phase differences derived for the reference tire at the plurality of temperatures and the phase difference derived for the tire to be evaluated are compared, and rolling resistance of the tire to be evaluated is evaluated. Thereby, the rolling resistance can be adequately evaluated even at a temperature at which a difference from 25°C is large. The rolling resistance can be easily evaluated when comparing to the case in which the process of changing the atmospheric temperature is required. That is, according to the present invention, the rolling resistance can be appropriately and easily evaluated at an arbitrary temperature of the tire.

## BRIEF DESCRIPTION OF THE DRAWINGS

Fig. 1 is a plane view illustrating a device for evaluating rolling resistance of a tire according to an embodiment of the present invention.

Fig. 2 is a side view illustrating the device for evaluating rolling resistance of a tire according to the embodiment of the present invention.

Fig. 3 is a block diagram illustrating an electrical configuration of the device for evaluating rolling resistance of a tire according to the embodiment of the present invention.

Fig. 4 is a flow chart illustrating a phase difference deriving step of a reference tire according to the embodiment of the present invention.

Fig. 5 is a flow chart illustrating a rolling resistance evaluating step according to the embodiment of the present invention.

Fig. 6 is a graph schematically illustrating a phase difference between a variation in load applied to the tire and a variation in position of a drum.

Fig. 7 is a graph illustrating a relationship between a temperature of a sidewall of the tire and the phase difference.

Fig. 8 is a graph illustrating a relationship between a temperature of a tread of the tire and the phase difference.

Fig. 9 is a graph illustrating a relationship between a temperature T obtained based on the temperature of the tread of the tire and the temperature of the sidewall of the tire and the phase difference.

Fig. 10 is a graph illustrating a relationship between the temperature T of the tire and a phase difference $\delta$ for two types of tires, and an approximate formula in which the phase difference $\delta$ is expressed by a logarithmic function of the temperature T of the tire using a solid line.

Fig. 11 is a graph illustrating the relationship between the temperature T of the tire and the phase difference $\delta$ for two types of tires, and an approximate formula in which the phase difference $\delta$ is expressed by an exponential function of the temperature T of the tire using a solid line.

## MODES FOR CARRYING OUT THE INVENTION

A device for evaluating rolling resistance of a tire (hereinafter referred to simply as "evaluating device") 1 is a tire uniformity machine (TUM) that performs the tire uniformity test (JIS D 4233) for inspecting uniformity of the tire in a circumferential direction, and includes, as illustrated in Figs. 1 to 3, a base 1b, a tire shaft 2x, a tire rotating motor 2M (see Fig. 3, and not illustrated in Figs. 1 and 2) for rotating the tire shaft 2x and a tire 2 supported by the tire shaft 2x, a drum 3, a drum moving motor 3M (see Fig. 3, and not illustrated in Figs. 1 and 2) for moving the drum 3 in arrow directions of Figs. 1 and 2, a load sensor 5 for detecting a load applied to the tire 2, a position sensor 6 for detecting a position of the drum 3 in the arrow directions of Figs. 1 and 2, temperature sensors 7a and 7b for detecting a temperature of the tire 2, a temperature sensor 8 for detecting a temperature (hereinafter referred to as "atmospheric temperature") in a room in which the testing device 1 is disposed, and a controller 1c that controls each part of the evaluating device 1.

The tire shaft 2x is supported to be rotatable relative to the base 1b about an axis extending in a vertical direction. The tire shaft 2x and the tire 2 supported by the tire shaft 2x are rotated relative to the base 1b about the axis extending in the vertical direction by the tire rotating motor 2M driven under control of the controller 1c.

The drum 3 has a short cylindrical shape in which a length thereof in the vertical direction is shorter than that in a radial direction and which has a large diameter, and a drum shaft 3x extending in the vertical direction passes through the center thereof. Upper and lower ends of the drum shaft 3x are rotatably supported by a frame 3f. That is, the drum 3 is supported to be rotatable relative to the frame 3f about an axis extending in the vertical direction. The frame 3f is supported to be movable relative to a protrusion part 1b1 provided on an upper surface of the base 1b in the arrow directions of Figs. 1 and 2. The frame 3f and the drum 3 supported by the frame 3f are moved relative to the base 1b in horizontal directions (specifically, are alternately moved in an approaching direction (a direction moving toward the tire 2: in a leftward direction in Figs. 1 and 2), and a separating direction (a direction moving away from the tire 2: in a rightward direction in Figs. 1 and 2) by the drum moving motor 3M driven under the control of the controller 1c. The drum 3 includes an outer circumferential surface 3a that simulates a road surface on which the tire 2 is rolled.

In a state where the outer circumferential surface 3a contacts with the tread 2a of the tire 2, the load sensor 5 detects a load applied to the tire 2, and transmits a signal indicating the load to the controller 1c. The load sensor 5 is provided between the upper end of the drum shaft 3x and the frame 3f, and detects a load generated at the drum shaft 3x.

The position sensor 6 is provided on the protrusion part 1b1, detects a position of the drum 3 in the arrow directions of Figs. 1 and 2, and transmits a signal indicating the position to the controller 1c.

The temperature sensor 7a is a non-contact radiation thermometer disposed at a position that faces the tread 2a of the tire 2 (specifically, a portion of the tread 2a which does not contact with the drum 3) at a distance, detects a temperature of the tread 2a, and transmits a signal indicating the temperature to the controller 1c. The temperature measurement of the temperature sensor 7a is preferably performed before the tread 2a of the tire 2 and the drum 3 contact with each other. Thereby, an influence caused by heat of the drum 3 which enters and leaves the surface of the tread 2a of the tire 2 is excluded to the utmost, so that the temperature of the tire 2 can be accurately detected.

The temperature sensor 7b is a non-contact radiation thermometer disposed at a position that faces the sidewall 2b of the tire 2 at a distance, detects a temperature of the sidewall 2b, and transmits a signal indicating the temperature to the controller 1c.

The temperature sensor 8 is a thermometer disposed at an arbitrary position in the room where the testing device 1 is disposed, detects the atmospheric temperature, and transmits a signal indicating the atmospheric temperature to the controller 1c.

The controller 1c is configured of, for instance, a personal computer, and includes a central processing unit (CPU) that is an arithmetic processing unit, a read only memory (ROM), a random access memory (RAM), and the like. The ROM stores standing data such as a program executed by the CPU. The RAM temporarily stores necessary data in order for the CPU to execute the program.

Next, a phase difference deriving step for the reference tire (the tire of which rolling resistance is within a reference value) will be described with reference to Fig. 4.

Since the relationship between the phase difference and the rolling resistance differs depending on a type of the tire, the following steps need to be performed on each type of tire using the reference tire.

First, an initial temperature that is higher or lower than an atmospheric temperature is determined (SI). For example, the controller 1c selects one initial temperature that is higher or lower than the atmospheric temperature from a plurality of initial temperatures stored in the ROM based on the signal from the temperature sensor 8, and stores the selected one initial temperature in the RAM.

After a step of S1, the reference tire is heated or cooled, such that a temperature of the reference tire is set to the initial temperature determined in the step of S1 (S2). For example, the reference tire is heated in a heating oven or is cooled in a refrigerator, and the heating or the cooling thereof is stopped when a temperature of the reference tire (a temperature based on at least one of a temperature of the tread 2a and a temperature of the sidewall 2b, for example, an average value of them) reaches the initial temperature determined in the step of S1 based on the signals from the temperature sensors 7a and 7b.

After the step of S2, the reference tire is mounted on the tire shaft 2x (S3).

After the step of S3, temperatures of the tread 2a and the sidewall 2b of the reference tire are measured (S4). Specifically, the controller 1c receives the signals from the temperature sensors 7a and 7b, and stores the temperatures of the tread 2a and the sidewall 2b of the reference tire in the RAM based on the signals.

After the step of S4, it is determined whether or not the measurement in the step of S4 is the first time (S5). In the case of the first measurement (S5: YES), the process moves to a step of S7. In the case of the measurement other than the first measurement (that is, in the case of the second measurement or later) (S5: NO), it is determined whether or not an absolute value of a difference between the temperature of present measurement and the temperature of previous measurement exceeds a predetermined value x (S6). Specifically, the controller 1c sets a temperature based on the temperatures of the tread 2a and the sidewall 2b of the reference tire stored in the RAM in a latest step of S4 (for instance, an average value of these temperatures) to the temperature of present measurement, and a temperature based on the temperatures of the tread 2a and the sidewall 2b of the reference tire stored in the RAM in a previous step of S4 (for instance, an average value of these temperatures) to the temperature of previous measurement, calculates the absolute value of the difference between them, and determines whether or not the absolute value exceeds the predetermined value x stored in the ROM.

When the absolute value of the difference between the temperature of present measurement and the temperature of previous measurement exceeds the predetermined value x (S6: YES), the drum 3 is vibrated, and the phase difference $\delta$ is derived (S7).

Specifically, the controller 1c controls the drum moving motor 3M such that a load applied to the reference tire is changed in a state where the drum 3 contacts with the reference tire, and derives the phase difference $\delta$ between a variation in the load applied to the reference tire and a variation in the position of the drum 3 based on the signals from the load sensor 5 and the position sensor 6.

More specifically, the tire rotating motor 2M is driven to rotate the reference tire at a predetermined rotation frequency. Therefore, the drum 3 is moved as follows while maintaining the rotation of the reference tire. First, the drum 3 is moved (advanced) in an approaching direction to press the drum 3 to contact with the tread 2a of the reference tire, when an average value of loads applied to the reference tire reaches a predetermined value, the drum 3 is stopped. Then, the drum 3 is moved (retreated) in a separating direction, thereby reducing the load applied to the reference tire, and the drum 3 is stopped and moved (advanced) in the approaching direction again before the drum 3 moves away from the reference tire. When the average value of the loads applied to the reference tire reaches the predetermined value, the drum 3 is stopped, is moved (retreated) in the separating direction again, and reduces the load applied to the reference tire. The advancing and the retreating of the drum 3 are repetitively performed.

In this way, the drum 3 is alternately moved in a state where the reference tire is kept rotating and the drum 3 is kept in contact with the reference tire. In the meantime (for instance, for a short time of about one to two seconds), the controller 1c receives the signals from the load sensor 5 and the position sensor 6, and derives the phase difference $\delta$ between a variation in the load applied to the reference tire and a variation in the position of the drum 3.

When the load applied to the tire 2 and the position of the drum 3 are plotted on a graph, change curves as illustrated in Fig. 6 are obtained. Due to the attenuation characteristic of the rubber of the tire 2, the change curve of the load applied to the tire 2 is recorded earlier than that of the position of the drum 3 by the phase difference $\delta$.

A frequency of the advancing and the retreating of the drum 3 is, for instance, 2 to 6 Hz. However, since the frequency depends on the type or the rolling resistance of the tire 2, a frequency consistent with the tire is preferably preset by an experiment. In terms of facilitating movement control of the drum 3, the positions at which the drum 3 is stopped in the step of S7 (a most downstream position in the approaching direction (that is, a position at which the average value of the loads applied to the tire 2 reaches the predetermined value) and a most upstream position in the approaching direction (that is, a position just prior to being separated from the tire 2)) are preferably stored in the ROM of the controller 1c.

After the step of S7, the drum 3 moves away from the reference tire, air of the reference tire is released, and the reference tire is demounted from the tire shaft 2x (S8). Specifically, the controller 1c controls the drum moving motor 3M to move the drum 3 in the separating direction, thereby separating the drum 3 from the reference tire. Afterward, a worker demounts the reference tire from the tire shaft 2x, and releases the air of the reference tire.

After the step of S8, it is determined whether or not a predetermined time (for instance, 10 seconds) has elapsed (S9). When the predetermined time has not elapsed (S9: NO), this process is repeated. When the predetermined time has elapsed (S9: YES), the process returns to the step of S3, and the reference tire of which air pressure is set to a predetermined value is mounted on the tire shaft 2x.

When the absolute value of the difference between the temperature of present measurement and the temperature of previous measurement is less than the predetermined value x (S6: NO), it is determined whether or not to change the initial temperature (S10). Specifically, if there is an initial temperature that is not determined in the step of S1 among the plurality of initial temperatures stored in the ROM, the controller 1c determines that the initial temperature is changed (S10: YES), changes the former into the initial temperature, and returns the process to the step of S2. Meanwhile, if there is no initial temperature that is not determined in the step of S1 among the plurality of initial temperatures stored in the ROM, the controller 1c determines that the initial temperature is not changed (S10: NO), and advances the process to a step of S11.

In the step of S11, a parameter a is determined at the temperature T of the tire of Formula (2) below. Formula (2) is stored in the ROM of the controller 1c, and a value of the parameter a calculated in the step of S11 is stored in the RAM of the controller 1c.

$$T = a \cdot T_S + (1 - a) \cdot T_T \qquad (2)$$

($T_S$: temperature (°C) of the sidewall 2b, $T_T$: temperature (°C) of the tread 2a, and a: parameter)

In Formula (2), when a=1, the temperature T of the tire becomes the temperature of the sidewall 2b. When a=0, the temperature T of the tire becomes the temperature of the tread 2a. The parameter a is determined in each type of tire.

Specifically, a plurality of graphs obtained by changing the parameter a (a plurality of graphs illustrating a relationship between the temperature T of the tire and the phase difference $\delta$) are displayed on a display of the testing device 1, and the parameter a corresponding to the graph having a smallest variation in data among the plurality of graphs is selected.

For example, in a graph when a=1 (that is, a graph illustrating a relationship between the temperature of the sidewall 2b of the tire and the phase difference $\delta$: see Fig. 7) and in a graph when a=0 (that is, a graph illustrating a relationship between the temperature of the tread 2a of the tire and the phase difference $\delta$: see Fig. 8), the graph of Fig. 8 has a smaller variation in data than the graph of Fig. 7. The temperature of the tread 2a tends to be higher than that of the sidewall 2b by several degrees, and the data of the graph of Fig. 8 is shifted to the right side compared to the data of the graph of Fig. 7.

A graph when a=0.3 (see Fig. 9) has a still smaller variation in data than the graph of Fig. 8. In this case, the parameter a is determined to satisfy a=0.3 in the step of S11.

The graphs of Figs. 7 to 9 are results of deriving the phase differences $\delta$ at a plurality of temperatures within the range from the initial temperature to the atmospheric temperature in a process of changing the initial temperature into 70°C, 60°C, 50°C, and 40°C, heating the reference tire in the heating oven, and then making a temperature of the reference tire approach to the atmospheric temperature from each of the initial temperatures. In addition, the graphs of Figs. 7 to 9 are results of performing the steps of S3 to S8 for 30 seconds, setting an air pressure of the reference tire to 200 kPa, setting the frequency of the advancing and retreating of the drum 3 to 5.5 Hz, and collecting and analyzing data of the load applied to the reference tire for two seconds, and the position of the drum 3.

After the step of S11, parameters $\alpha$, $\beta$ and $\gamma$ in an approximate formula (Formula (1) below) illustrating the relationship between the phase difference $\delta$ and the temperature T of the tire are calculated based on the phase differences $\delta$ at the plurality of temperatures by a least square method or the like, and the approximate formula (Formula (1)) is determined (S12). Formula (1) is stored in the ROM of the controller 1c, and values of the parameters $\alpha$, $\beta$ and $\gamma$ calculated in the step of S12 are stored in the RAM of the controller 1c. The parameters $\alpha$, $\beta$ and $\gamma$ are determined in each type of tire.

$$\delta = \alpha \cdot \exp(-\gamma \cdot T) + \beta \qquad (1)$$

($\delta$: phase difference (°), $\alpha$, $\beta$ and $\gamma$: parameters, T: temperature (°C) of the tire)

A relationship between the temperature T of the tire and the phase difference $\delta$ for two types of tires A and B is illustrated in Figs. 10 and 11. In Fig. 10, an approximate formula in which the phase difference $\delta$ is expressed by a logarithmic function of the temperature T of the tire is indicated by a solid line. In Fig. 11, an approximate formula in which the phase difference $\delta$ is expressed by an exponential function of the temperature T of the tire is indicated by a solid line. In Fig. 10, an error between the derived phase difference and the phase difference from the approximate formula is large in a high-temperature region of 40°C or higher. On the other hand, in Fig. 11, an error between the derived phase difference and the phase difference from the approximate formula is small from a low-temperature region to the high-temperature region of 40°C or higher.

After the step of S12, the routine is terminated.

Next, a rolling resistance evaluating step will be described with reference to Fig. 5.

First, a tire to be evaluated (hereinafter referred to as "target tire") is mounted on the tire shaft 2x (S51).

After the step of S51, temperatures of the tread 2a and the sidewall 2b of the target tire are measured (S52). Specifically, the controller 1c receives the signals from the temperature sensors 7a and 7b, and stores the temperatures of the tread 2a and the sidewall 2b of the target tire based on the signals in the RAM.

After the step of S52, a tire uniformity test is performed (S53). Specifically, the tire rotating motor 2M is driven to rotate the target tire at a predetermined rotation frequency, and simultaneously the drum moving motor 3M is driven to move the drum 3 in an approaching direction. Thereby, when the drum 3 is brought into contact with and pressed against the tread 2a of the target tire, and an average value of loads applied to the target tire detected by the load sensor 5 reaches a predetermined value, the driving of the drum moving motor 3M is stopped, and the drum 3 is stopped. While the target tire makes one rotation in each of a forward direction and a backward direction, the load applied to the target tire is detected by the load sensor 5. Thereby, it can be measured how the load applied to the target tire is changed while the target tire makes one rotation, and the tire uniformity can be evaluated based on the result of measurement. This tire uniformity test can be performed on one tire for a short time of about 30 seconds, and thus the test can be quickly performed on all the tires manufactured on a manufacturing line.

After the step of S53, the drum 3 is vibrated, and the phase difference $\delta$ is derived (S54). Specifically, like the step of S7, the controller 1c controls the drum moving motor 3M such that the load applied to the target tire is changed in a state where the drum 3 contacts with the target tire, and derives the phase difference $\delta$ between a variation in the load applied to the target tire and a variation in the position of the drum 3 based on the signals from the load sensor 5 and the position sensor 6.

After the step of S54, the temperature T of the target tire (the temperature T that is obtained from Formula (2) using the parameter a determined in the step of S11 for the phase difference deriving step (see Fig. 4) of the reference tire corresponding to a type of the target tire, and from the result of measurement of the step of S52) is applied to the approximate formula (Formula (1) above) determined in the step of S12 for the phase difference deriving step (see Fig. 4) of the reference tire corresponding to a type of the target tire, a phase difference δb of the reference tire is calculated (S55). The phase difference δb falls into a phase difference corresponding to the temperature of the target tire among the phase differences δ at the plurality of temperatures (the plurality of temperatures within the range from the initial temperature to the atmospheric temperature) derived in the step of S6 for the phase difference deriving step (see Fig. 4) of the reference tire corresponding to a type of the target tire.

After the step of S55, it is determined whether or not an absolute value of a difference between the phase difference δb calculated in the step of S55 and the phase difference δ of the target tire derived in the step of S54 is less than or equal to an allowable value (for instance, 0.1°) (S56). For example, if the relationship between the phase difference δ of the target tire derived in the step of S54 and the temperature T of the target tire is within a range interposed between two curve lines indicated in Fig. 11 by a broken line, it is determined that the absolute value is less than or equal to the allowable value (S56: YES). If the relationship is not within the range, it is determined that the absolute value is not less than or equal to the allowable value (S56: NO).

When the absolute value is less than or equal to the allowable value (S56: YES), it is determined that the rolling resistance of the target tire is acceptable (S57). The target tire determined to be acceptable in the step of S57 is treated as a tire that satisfies product standards.

When the absolute value is not less than or equal to the allowable value (S56: NO), it is determined that the rolling resistance of the target tire is unacceptable (S58). In this case, if needed, the rolling resistance of the target tire is measured by a rolling resistance testing machine or the like, and is finally determined to be acceptable or unacceptable. The target tire that is finally determined to be unacceptable is scrapped as needed.

After the step of S57 or S58, the routine is terminated.

As described above, according to the present embodiment, when the phase difference (the phase difference between the load applied to the tire 2 and the variation in the position of the drum 3) is derived for the reference tire, the phase differences δ are derived at the plurality of temperatures within the range from the initial temperature to the atmospheric temperature (in the present embodiment, until the absolute value of the difference between the temperature of present measurement and the temperature of previous measurement is less than or equal to the predetermined value x) while the temperature of the reference tire that reached the initial temperature higher or lower than the atmospheric temperature by heating or cooling, approaches the atmospheric temperature from the initial temperature (see S2 to S7 to S9: YES to S7 or the like of Fig. 4). The phase difference δb corresponding to the temperature of the tire to be evaluated among the phase differences δ derived for the reference tire at the plurality of temperatures and the phase difference δ derived for the tire to be evaluated are compared to evaluate the rolling resistance of the tire to be evaluated (see S54 to S56 of Fig. 5). Thereby, the rolling resistance can be adequately evaluated even at a temperature at which a difference from 25°C is large. The rolling resistance can be easily evaluated when comparing to the case in which the process of changing the atmospheric temperature is required. That is, according to the present embodiment, the rolling resistance can be appropriately and easily evaluated at an arbitrary temperature of the tire.

In each of the plurality of steps in which the initial temperature is changed when the phase difference δ for the reference tire is derived, and the temperature of the reference tire approaches to the atmospheric temperature from the initial temperature, the controller 1c derives the phase differences δ at the plurality of temperatures (see S10 of Fig. 4). In this case, an influence of the initial temperature on the phase difference δ can be recognized by changing the initial temperature to derive the phase difference in the plurality of steps, the phase difference δ of the reference tire having a small variation excluding the influence of the initial temperature can be derived.

When the phase differences δ at the plurality of temperatures are derived for the reference tire, the controller 1c controls the drum moving motor 3M such that the load applied to the reference tire is changed in a state where the drum 3 contacts with the reference tire when the phase difference δ at each of the plurality of temperatures is derived, and controls the drum moving motor 3M such that the drum 3 moves away from the reference tire after the phase difference δ is derived at a first temperature that is one of the plurality of temperatures and before the phase difference δ is derived at a second temperature that is one of the plurality of temperatures and is different from the first temperature (see S8 of Fig. 4). When the tire 2 and the drum 3 are maintained in a contact state, a temperature of the surface of the portion (the tread 2a) of the tire 2 which contacts with the drum 3 tends to be different from a temperature of the inside (the rubber portion) of the tire 2 because heat of the drum 3 enters and leaves the surface of the tread 2a. In this case, when the temperature of the surface of the tire 2 is measured, the measured temperature can be different from the temperature of the inside of the tire 2. When the tire 2 is kept rotating in the state in which the tire 2 and the drum 3 are in contact with each other, the temperature of the tire 2 rises. Thus, when the phase difference δ is derived while the initial temperature is set to a temperature higher than the atmospheric temperature and the temperature of the reference tire is lowered from the initial temperature toward the atmospheric temperature, a problem that the temperature of the reference tire is not easily lowered occurs. According to the above configuration, since the drum 3 moves away from the reference tire before and after the phase difference is derived at each temperature, the measured temperature of the reference tire can be inhibited from being affected by the temperature of the drum 3, and the above problem can be avoided by preventing a rise in the temperature of the reference tire.

The controller 1c determines the approximate formula illustrating the relationship between the phase difference δ and the temperature T of the tire based on the phase differences δ derived for the reference tire at the plurality of temperatures (see S12 of Fig. 4). The controller 1c compares the phase difference δb obtained by applying the temperature T of the tire to be evaluated to the determined approximate formula and the phase difference δ derived for the tire to be evaluated, and evaluates the rolling resistance of the tire to be evaluated (see S56 to S58 of Fig. 5). In this case, the phase difference δb obtained by applying the temperature T of the tire to be evaluated to the predetermined approximate formula and the phase difference δ derived for the tire to be evaluated are compared, thereby easily evaluating the rolling resistance.

The controller 1c uses Formula (1) above as the approximate formula, and calculates the parameters α, β and γ in Formula (1) based on the phase differences δ derived for the reference tire at the plurality of temperatures, thereby determining the approximate formula (see S12 of Fig. 4). As described above, in the approximate formula in which the phase difference δ is expressed by the logarithmic function of the temperature T of the tire, the error between the derived phase difference δ and the phase difference from the approximate formula is large in the high-temperature region of 40°C or higher (see Fig. 10). In contrast, according to the approximate formula in which the phase difference δ is expressed by the exponential function of the temperature T of the tire as in formula (1), the error between the derived phase difference δ and the phase difference from the approximate formula is small from the low-temperature region to the high-temperature region of 40°C or higher (see Fig. 11). According to Formula (1) above, since only three parameters called α, β and γ are calculated and stored, it is possible to shorten the time required for the calculation and reduce a capacity of the memory.

In the present embodiment, the temperature of the tread 2a of the tire is at least used as the temperature T of the tire (see Formula (2) above). The tread 2a has larger thickness and higher resistance to deformation than the sidewall 2b, and has a great contribution to energy loss of the tire. According to the above configuration, the temperature of the tread 2a is at least used as the temperature T of the tire, and therefore, there is a high possibility to derive a temperature characteristic of the phase difference δ (a characteristic of the phase difference δ corresponding to the temperature T of the tire) with a high accuracy.

In the present embodiment, the temperature of the tread 2a of the tire and the temperature of the sidewall 2b of the tire are used as the temperature T of the tire (see Formula (2) above). In this case, both the temperature of the tread 2a and the temperature of the sidewall 2b are used, the temperature T of the tire can be more flexibly set.

In the present embodiment, the temperature T expressed by Formula (2) above is used as the temperature T of the tire. In this case, the temperature T of the tire can be more commonly set.

The controller 1c controls the drum moving motor 3M such that the load applied to the tire 2 is changed in a state where the rotation of the tire 2 is maintained, and derives the phase difference δ based on the signals from the load sensor 5 and the position sensor 6. In this case, an average phase difference of the tire 2 in a circumferential direction can be derived.

The evaluating device 1 according to the present embodiment is a tire uniformity machine testing the tire uniformity to inspect uniformity of the tire 2 in the circumferential direction. In a tire uniformity machine that tests a total number of tires, the temperature of the tire as well as the atmospheric temperature are not easily controlled to 20°C or higher and 30°C or lower, and temperature control is not generally performed, so that the temperature of the tire immediately after vulcanization may reach 50°C. However, according to the present embodiment, since the rolling resistance can be appropriately and easily evaluated at an arbitrary temperature of the tire, this is also effective for the tire uniformity machine.

After the tire uniformity test is performed on the tire to be evaluated, the controller 1c derives the phase difference δ (see S53 and S54 of Fig. 5). In this case, since the characteristics of the rubber of the tire are stable after the tire uniformity test is performed, the test can also be performed on any tire under the same conditions, and accuracy of the evaluation of the tire can be enhanced.

While a preferred embodiment of the present invention has been described, the present invention is not limited to the above embodiment, and changes in design are possible in various ways insofar as it is defined in the claims.

- Without being limited to deriving the phase difference after the tire uniformity test is performed on the tire to be evaluated, the phase difference may be derived before the tire uniformity test is performed on the tire to be evaluated.
- The evaluating device according to the present invention is not limited to the tire uniformity machine, and may be another tire testing device (a balancer or the like). In the case of a device (a balancer or the like) without a pressurizing member, the present invention can be carried out with the pressurizing member separately installed on the device.

- Without being limited to evaluating all of the manufactured tires, some of the manufactured tires may be evaluated (that is, sampling test may be performed).
- Depending on a type of the tire, either the temperature of the tread of the tire or the temperature of the sidewall of the tire may be used. For example, with regard to the reference tire, the initial temperature may be changed to derive the phase difference in the plurality of steps for both the temperature of the tread and the temperature of the sidewall, and one having a small variation in data between the temperature of the tread and the temperature of the sidewall may be used.
- In the aforementioned embodiment, the number of temperature sensors is two, but it may be one or more. For example, only the temperature sensor for detecting the temperature of the tread of the tire may be provided.
- In the aforementioned embodiment, the parameter a in Formula (2) is determined by selecting a parameter corresponding to the graph having a smallest variation in data among the plurality of graphs in which the parameter a is changed but the present invention is not limited thereto. For example, the parameter a may be determined by substituting Formula (2) for Formula (1) and by a least square method along with the parameters $\alpha$, $\beta$ and $\gamma$ of Formula (1).
- The temperature T expressed by a formula other than Formula (2) (for instance, the average value of the temperatures of the tread and the sidewall) may be used as the temperature of the tire.
- A formula other than Formula (1) may be used as the approximate formula.
- The rolling resistance may be evaluated based on scattered data pertinent to the phase differences for the reference tire at the plurality of temperatures without determining the approximate formula.
- The phase difference may be derived by changing the load applied to the tire by the movement of the pressurizing member in a state where the rotation of the tire is stopped.
- When the phase difference for the reference tire is derived, the phase difference is derived at each of the plurality of temperatures, and then the pressurizing member moves away from the reference tire. Then, the reference tire may not be demounted from the tire shaft, and the air of the reference tire may not be released. After the phase difference is derived at the first temperature and before is derived at the second temperature, the pressurizing member may not be separated from the reference tire.
- The initial temperature may not be changed.

This application is based on Japanese Patent Application No. 2016-082199, filed on April 15, 2016, the contents of which are incorporated herein by reference.

DESCRIPTION OF REFERENCE NUMERALS AND SIGNS

1 Evaluating device
1c Controller (phase difference derivation unit, rolling resistance evaluation unit, approximate formula determination unit)
2 Tire
2a Tread
2b Sidewall
3 Drum (pressurizing member)
3a Outer circumferential surface (surface)
3M Drum moving motor (moving mechanism)
5 Load sensor
6 Position sensor
7a, 7b Temperature sensor

## Claims

**1.** A device for evaluating rolling resistance of a tire comprising:

a pressurizing member having a surface that simulates a road surface on which the tire is rolled;
a moving mechanism for alternately moving the pressurizing member in an approaching direction that is a direction moving toward the tire and in a separating direction that is a direction moving away from the tire;
a load sensor configured for detecting a load applied to the tire in a state where the surface of the pressurizing member contacts with the tire;
a position sensor for detecting positions of the pressurizing member in directions that are the approaching direction and the separating direction;
a phase difference derivation unit for controlling the moving mechanism such that the load applied to the tire is changed, and deriving a phase difference between a variation in the load and a variation in the position of the pressurizing member based on signals from the load sensor and the position sensor; and
a rolling resistance evaluation unit for comparing the phase difference derived for a reference tire by the phase difference derivation unit and the phase difference derived for a tire to be evaluated by the phase difference derivation unit, and evaluating rolling resistance of the tire to be evaluated, wherein

when the phase difference is derived for the reference tire, the phase difference derivation unit derives the phase differences at a plurality of temperatures within a range from an initial temperature to an atmospheric temperature while a temperature of the reference tire that reached the initial temperature higher or lower than the atmospheric temperature by heating or cooling approaches the atmospheric temperature from the initial temperature, and
the rolling resistance evaluation unit compares the phase difference corresponding to a temperature of the tire to be evaluated among the phase differences derived for the reference tire by the phase difference derivation unit at the plurality of temperatures and the phase difference derived for the tire to be evaluated by the phase difference derivation unit, and evaluates the rolling resistance of the tire to be evaluated.

**2.** The device for evaluating rolling resistance of a tire according to claim 1, wherein when the phase difference is derived for the reference tire, the initial temperature is changed, and the phase difference derivation unit derives the phase differences at the plurality of temperatures while the temperature of the reference tire approaches the atmospheric temperature from each of the initial temperatures.

**3.** The device for evaluating rolling resistance of a tire according to claim 1, wherein, when the phase differences are derived for the reference tire at the plurality of temperatures, the phase difference derivation unit is configured to:

control the moving mechanism such that the load applied to the reference tire is changed in a state where the pressurizing member contacts with the reference tire when the phase difference is derived at each of the plurality of temperatures; and
control the moving mechanism such that the pressurizing member moves away from the reference tire after the phase difference is derived at a first temperature that is one of the plurality of temperatures and before the phase difference is derived at a second temperature that is one of the plurality of temperatures and is different from the first temperature.

**4.** The device for evaluating rolling resistance of a tire according to claim 2, wherein, when the phase differences are derived for the reference tire at the plurality of temperatures, the phase difference derivation unit is configured to:

control the moving mechanism such that the load applied to the reference tire is changed in a state where the pressurizing member contacts with the reference tire when the phase difference is derived at each of the plurality of temperatures; and
control the moving mechanism such that the pressurizing member moves away from the reference tire after the phase difference is derived at a first temperature that is one of the plurality of temperatures and before the phase difference is derived at a second temperature that is one of the plurality of temperatures and is different from the first temperature.

**5.** The device for evaluating rolling resistance of a tire according to any one of claims 1 to 4, further comprising an approximate formula determination unit configured to determine an approximate formula illustrating a relationship between the phase difference and a temperature of the tire based on the phase differences derived for the reference tire by the phase difference derivation unit at the plurality of temperatures, wherein
the rolling resistance evaluation unit compares the phase difference obtained by applying the temperature of the tire to be evaluated to the approximate formula determined by the approximate formula determination unit and the phase difference derived for the tire to be evaluated by the phase difference derivation unit, and evaluates the rolling resistance of the tire to be evaluated.

**6.** The device for evaluating rolling resistance of a tire according to claim 5, wherein the approximate formula determination unit uses Formula (1) below as the approximate formula, and calculates parameters in Formula (1) based on the phase differences derived for the reference tire by the phase difference derivation unit at the plurality of temperatures, thereby determining the approximate formula.

$$\delta = \alpha \cdot \exp(-\gamma \cdot T) + \beta \quad (1)$$

($\delta$: phase difference (°), $\alpha$, $\beta$ and $\gamma$: parameters, T: temperature (°C) of the tire)

**7.** The device for evaluating rolling resistance of a tire according to claim 6, wherein a temperature of a tread of the tire is at least used as the temperature of the tire.

**8.** The device for evaluating rolling resistance of a tire according to claim 7, wherein the temperature of the tread of the tire and a temperature of a sidewall of the tire are used as the temperature of the tire.

**9.** The device for evaluating rolling resistance of a tire according to claim 8, wherein a temperature T expressed by Formula (2) below is used as the temperature of the tire.

$$T = a \cdot T_S + (1 - a) \cdot T_T \quad (2)$$

($T_S$: temperature (°C) of the sidewall of the tire, $T_T$: temperature (°C) of the tread of the tire, and a: parameter)

**10.** The device for evaluating rolling resistance of a tire according to claim 1, wherein the phase difference derivation unit controls the moving mechanism such that the load applied to the tire is changed in a state where rotation of the tire is maintained, and derives the phase difference based on the signals from the load sensor and the position sensor.

**11.** The device for evaluating rolling resistance of a tire according to claim 1, wherein the device is a tire uniformity machine that performs a tire uniformity test for inspecting uniformity of the tire in a circumferential direction.

**12.** The device for evaluating rolling resistance of a tire according to claim 11, wherein the phase difference derivation unit derives the phase difference after the tire uniformity test is performed on the tire to be evaluated.

**13.** The device for evaluating rolling resistance of a tire according to claim 1, wherein a temperature of a tread of the tire is at least used as the temperature of the tire.

**14.** A method of evaluating rolling resistance of a tire using an evaluating device including: a pressurizing member having a surface that simulates a road surface on which the tire is rolled; a moving mechanism for alternately moving the pressurizing member in an approaching direction that is a direction moving toward the tire and in a separating direction that is a direction moving away from the tire; a load sensor for detecting a load applied to the tire in a state where the surface of the pressurizing member contacts with the tire; and a position sensor for detecting positions of the pressurizing member in directions that are the approaching direction and the separating direction, the method comprising:

a phase difference deriving step for controlling the moving mechanism such that the load applied to the tire is changed, and deriving a phase difference between a variation in the load and a variation in the position of the pressurizing member based on signals from the load sensor and the position sensor; and

a rolling resistance evaluating step for comparing the phase difference derived for a reference tire in the phase difference deriving step and the phase difference derived for a tire to be evaluated in the phase difference deriving step, and evaluating rolling resistance of the tire to be evaluated, wherein

in the phase difference deriving step for the reference tire, the phase differences are derived at a plurality of temperatures within a range from an initial temperature to an atmospheric temperature while a temperature of the reference tire that reached the initial temperature higher or lower than the atmospheric temperature by heating or cooling approaches the atmospheric temperature from the initial temperature, and

in the rolling resistance evaluating step, the phase difference corresponding to a temperature of the tire to be evaluated among the phase differences derived at the plurality of temperatures during the phase difference deriving step for the reference tire is compared with the phase difference derived during the phase difference deriving step for the tire to be evaluated to evaluate the rolling resistance of the tire to be evaluated.

FIG.1

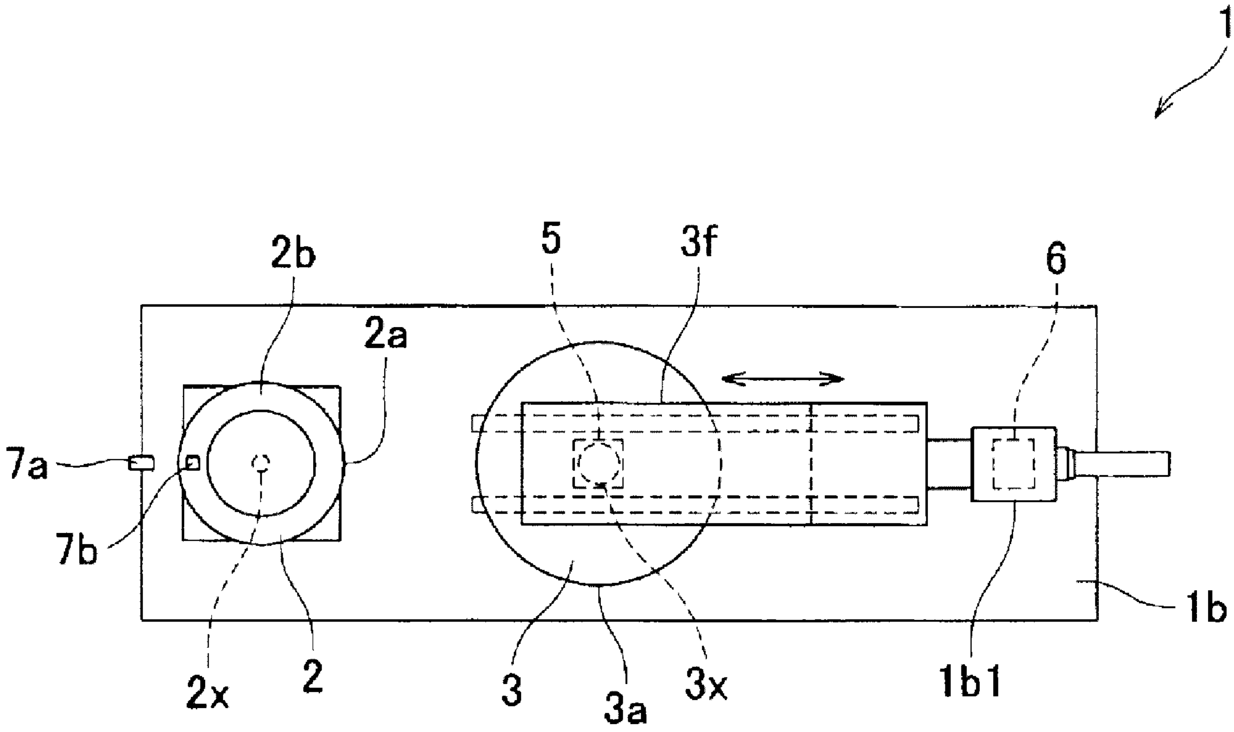
1
2b
5
3f
6
2a
7a
7b
1b
2x
2
3
3a
3x
1b1

FIG.2

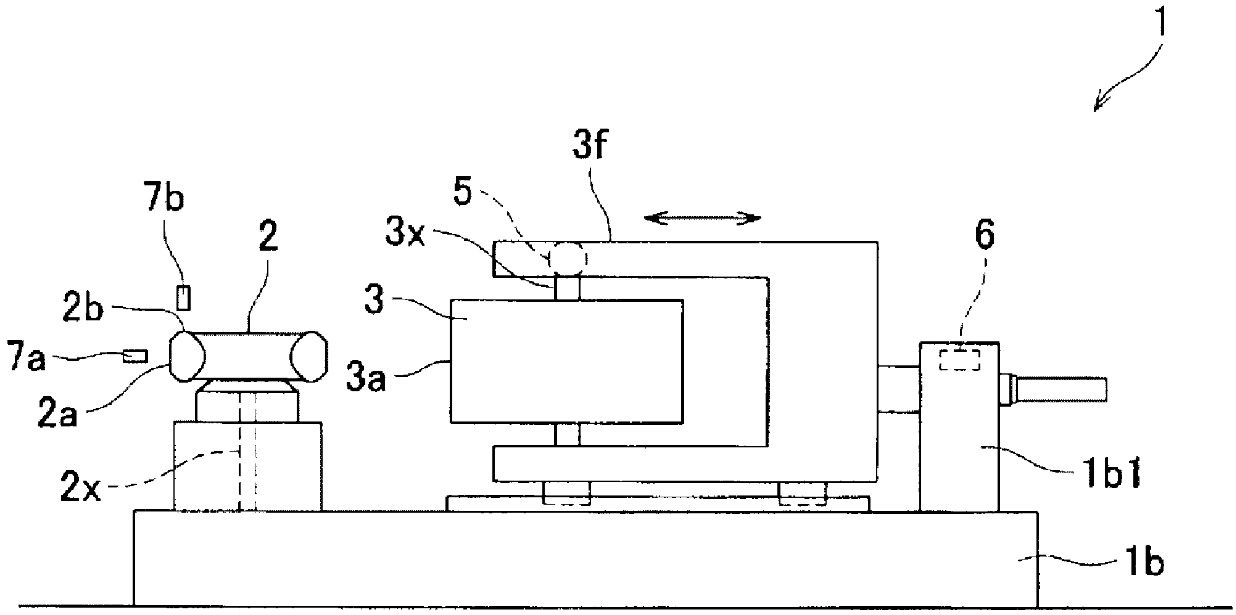
1
3f
5
7b
2
3x
6
2b
3
7a
3a
2a
1b1
2x
1b

*FIG.3*

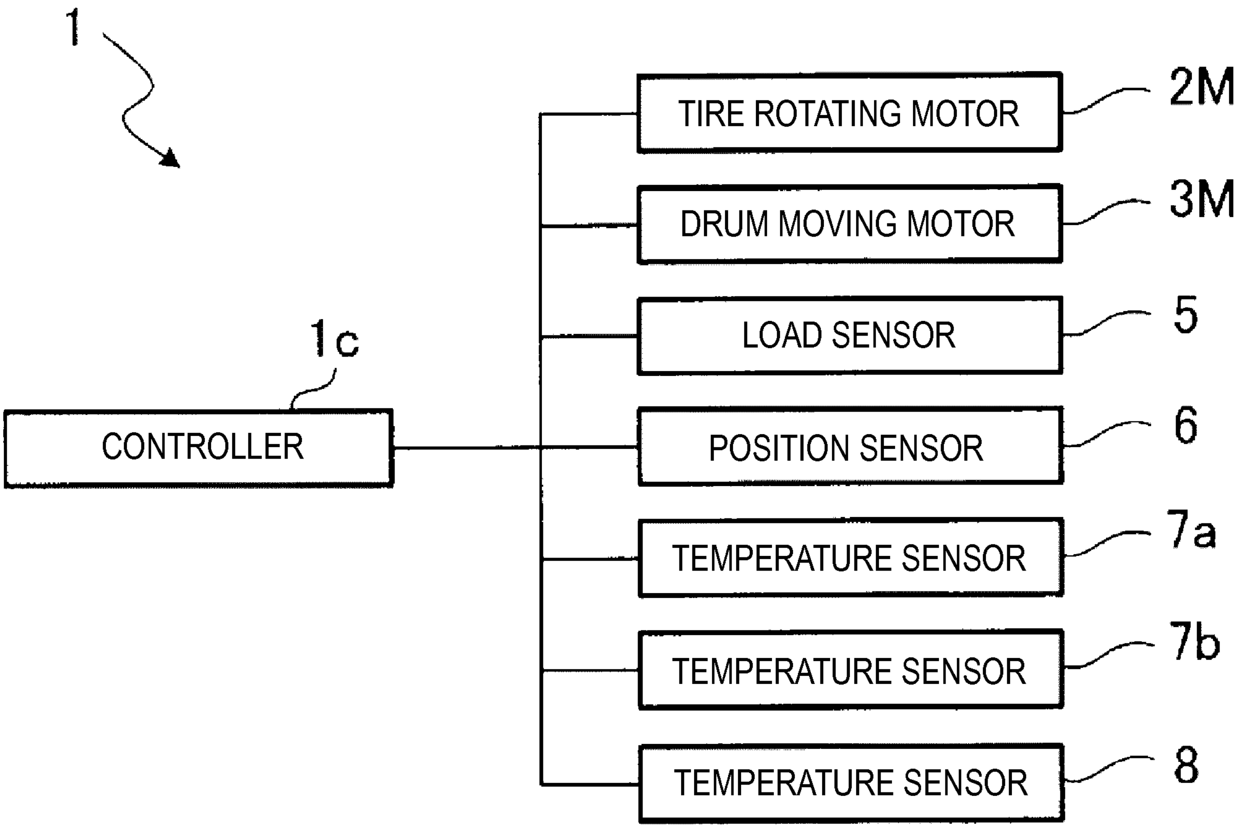
1
1c
CONTROLLER
TIRE ROTATING MOTOR
2M
DRUM MOVING MOTOR
3M
LOAD SENSOR
5
POSITION SENSOR
6
TEMPERATURE SENSOR
7a
TEMPERATURE SENSOR
7b
TEMPERATURE SENSOR
8

FIG.4

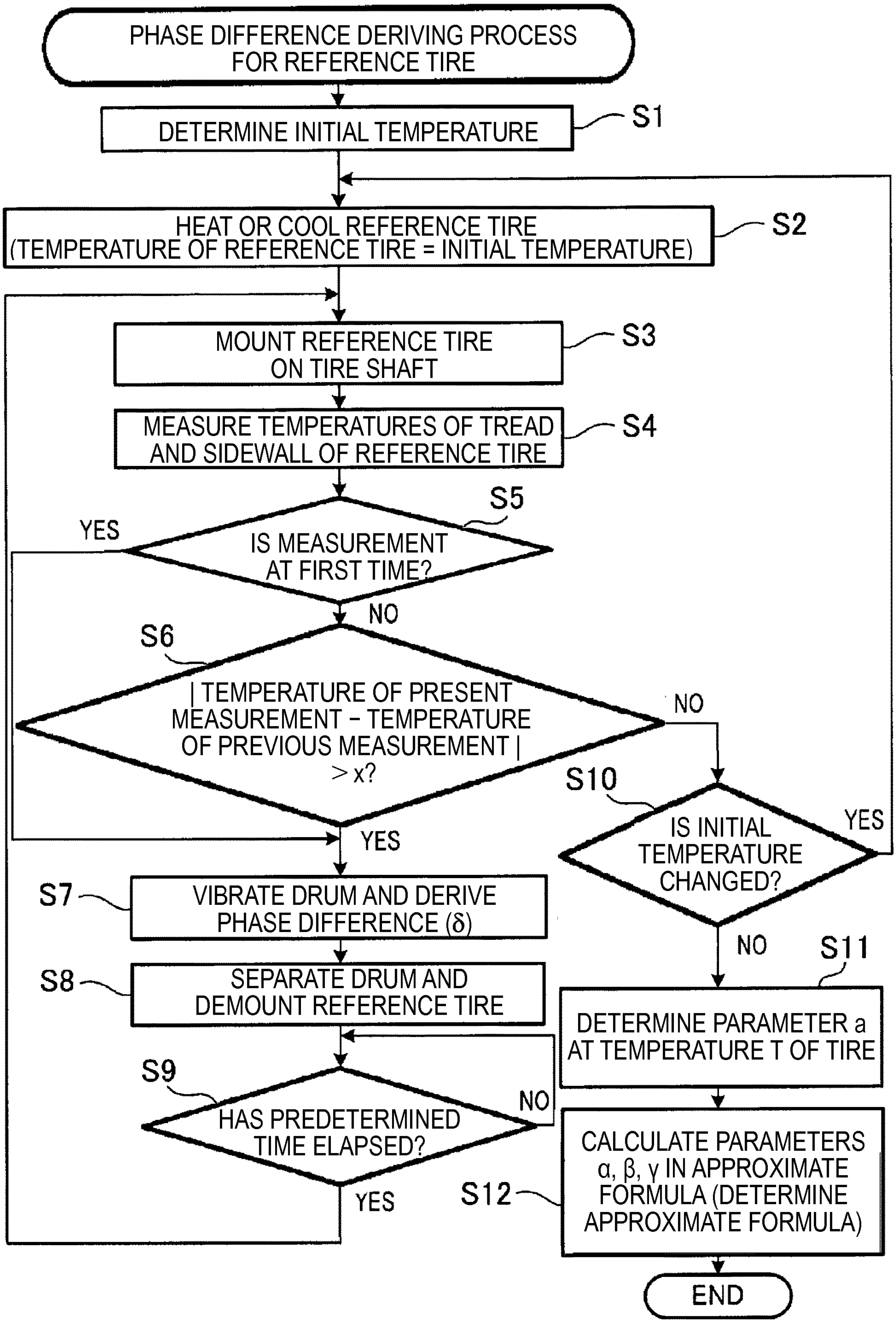
PHASE DIFFERENCE DERIVING PROCESS FOR REFERENCE TIRE
DETERMINE INITIAL TEMPERATURE
S1
HEAT OR COOL REFERENCE TIRE (TEMPERATURE OF REFERENCE TIRE = INITIAL TEMPERATURE)
S2
MOUNT REFERENCE TIRE ON TIRE SHAFT
S3
MEASURE TEMPERATURES OF TREAD AND SIDEWALL OF REFERENCE TIRE
S4
S5
IS MEASUREMENT AT FIRST TIME?
YES
NO
S6
| TEMPERATURE OF PRESENT MEASUREMENT − TEMPERATURE OF PREVIOUS MEASUREMENT | > x?
NO
YES
S10
IS INITIAL TEMPERATURE CHANGED?
YES
NO
S7
VIBRATE DRUM AND DERIVE PHASE DIFFERENCE (δ)
S8
SEPARATE DRUM AND DEMOUNT REFERENCE TIRE
S9
HAS PREDETERMINED TIME ELAPSED?
NO
YES
S11
DETERMINE PARAMETER a AT TEMPERATURE T OF TIRE
S12
CALCULATE PARAMETERS α, β, γ IN APPROXIMATE FORMULA (DETERMINE APPROXIMATE FORMULA)
END

FIG.5

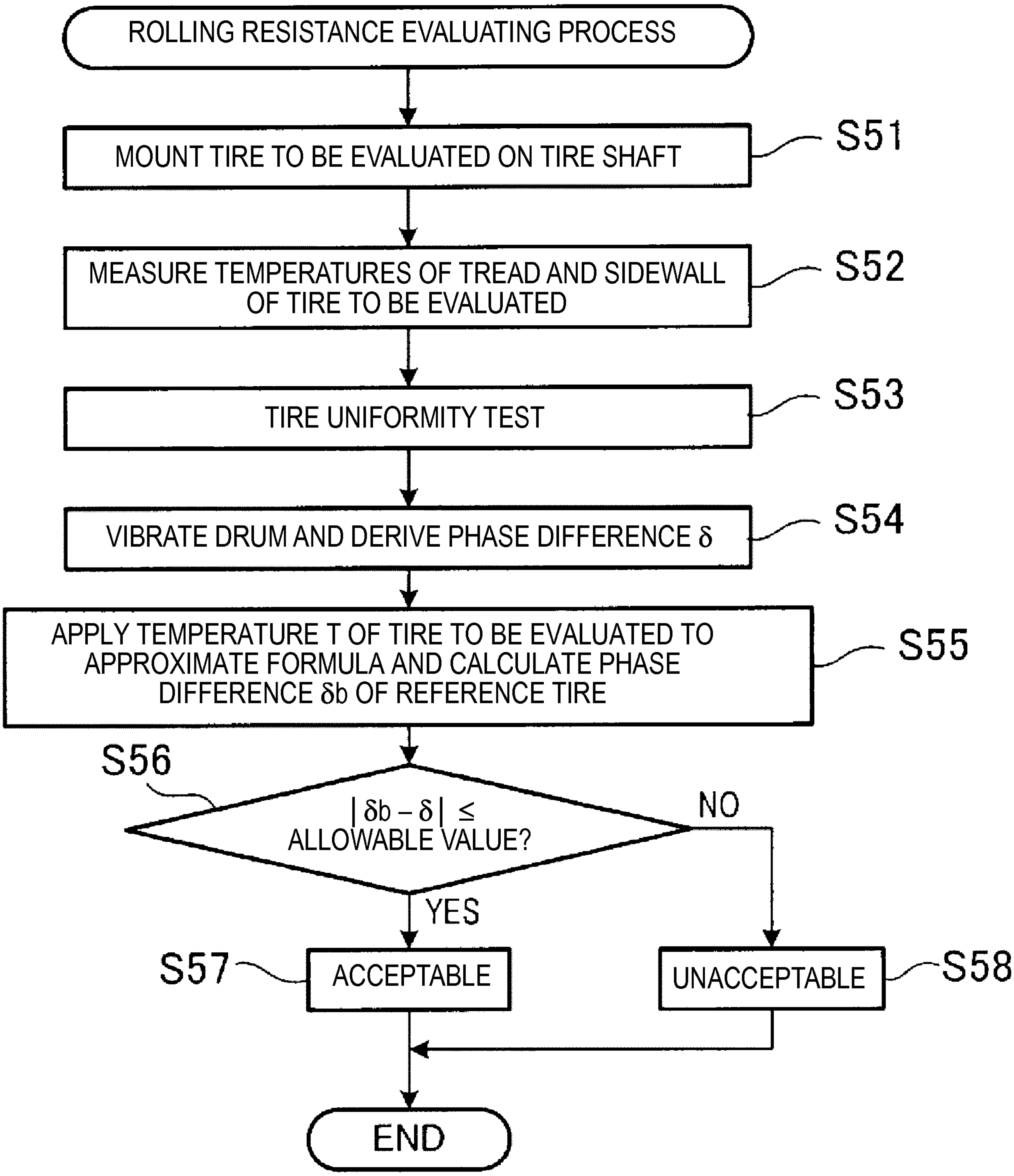
ROLLING RESISTANCE EVALUATING PROCESS
MOUNT TIRE TO BE EVALUATED ON TIRE SHAFT
S51
MEASURE TEMPERATURES OF TREAD AND SIDEWALL OF TIRE TO BE EVALUATED
S52
TIRE UNIFORMITY TEST
S53
VIBRATE DRUM AND DERIVE PHASE DIFFERENCE δ
S54
APPLY TEMPERATURE T OF TIRE TO BE EVALUATED TO APPROXIMATE FORMULA AND CALCULATE PHASE DIFFERENCE δb OF REFERENCE TIRE
S55
S56
|δb – δ| ≤ ALLOWABLE VALUE?
NO
YES
S57
ACCEPTABLE
UNACCEPTABLE
S58
END

FIG.6

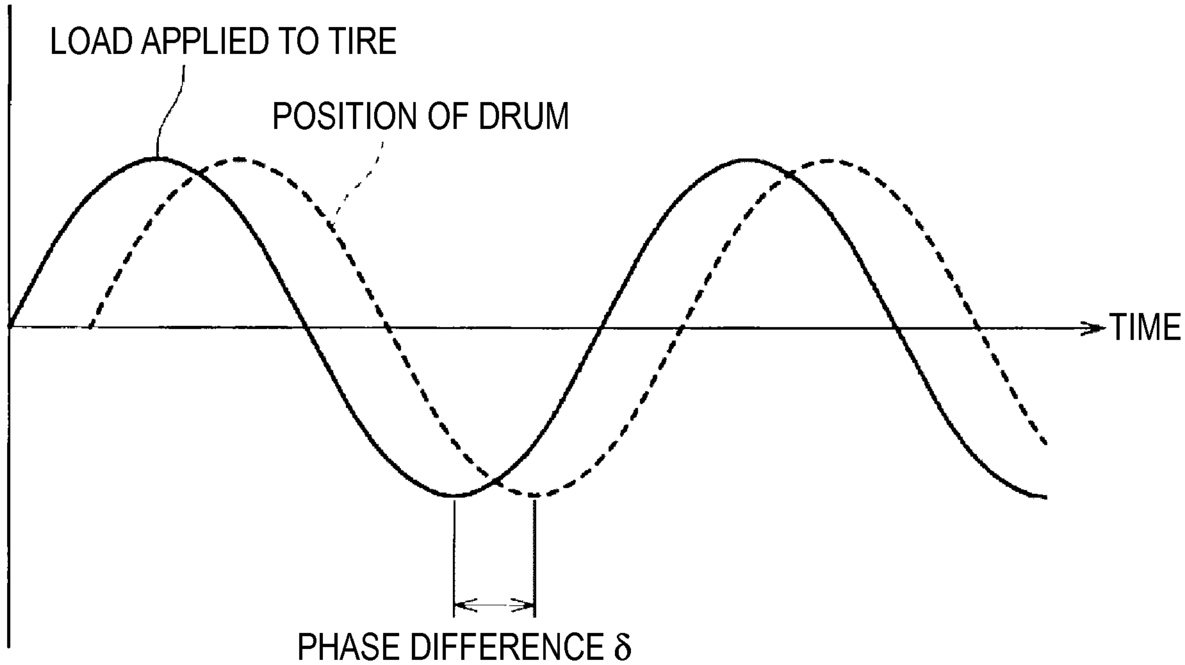
LOAD APPLIED TO TIRE
POSITION OF DRUM
TIME
PHASE DIFFERENCE δ

FIG.7

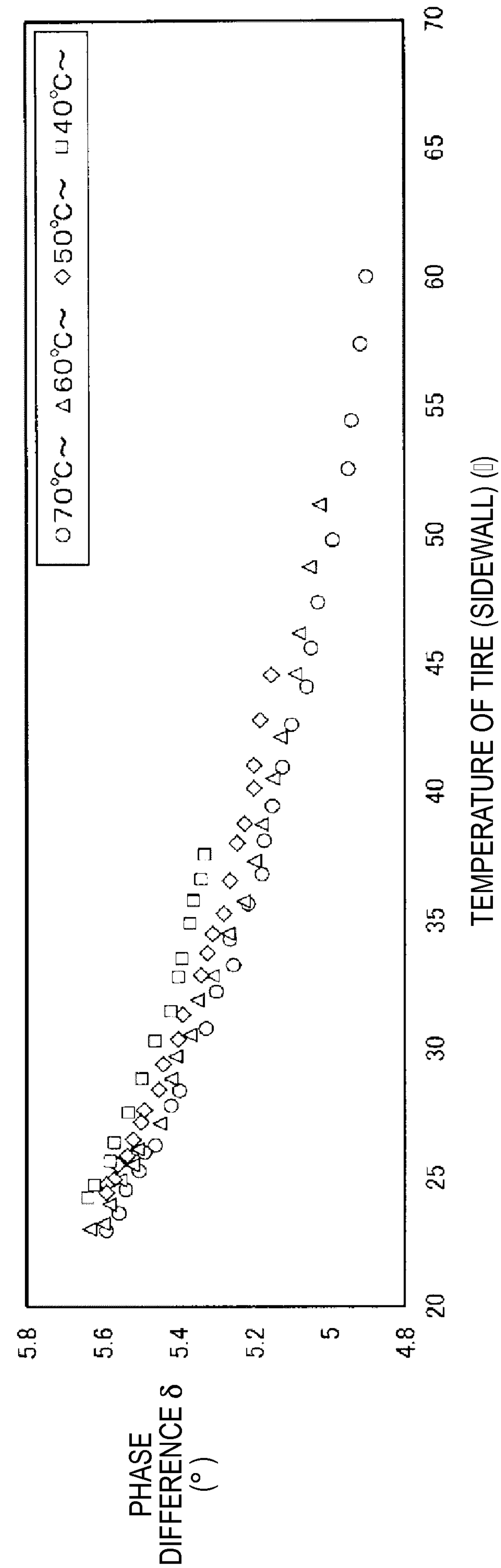
○70℃~ △60℃~ ◇50℃~ □40℃~
PHASE DIFFERENCE δ (°)
5.8
5.6
5.4
5.2
5
4.8
20
25
30
35
40
45
50
55
60
65
70
TEMPERATURE OF TIRE (SIDEWALL)

FIG.8

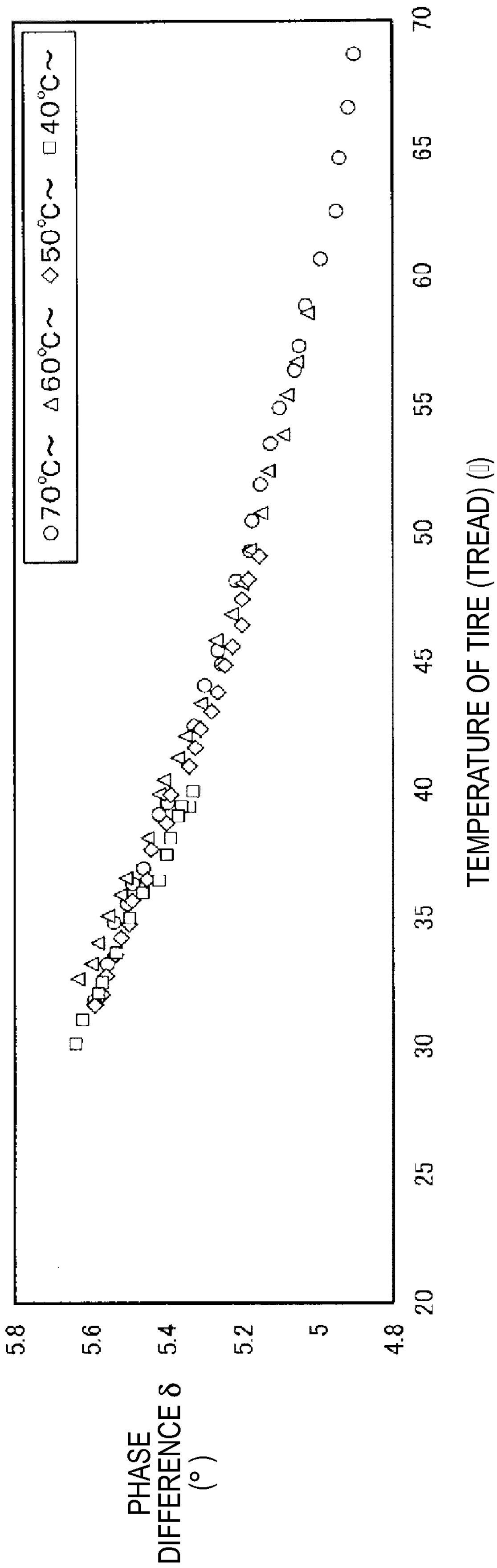
PHASE DIFFERENCE δ (°)
TEMPERATURE OF TIRE (TREAD)
○70℃~ △60℃~ ◇50℃~ □40℃~
5.8
5.6
5.4
5.2
5
4.8
20
25
30
35
40
45
50
55
60
65
70

*FIG.9*

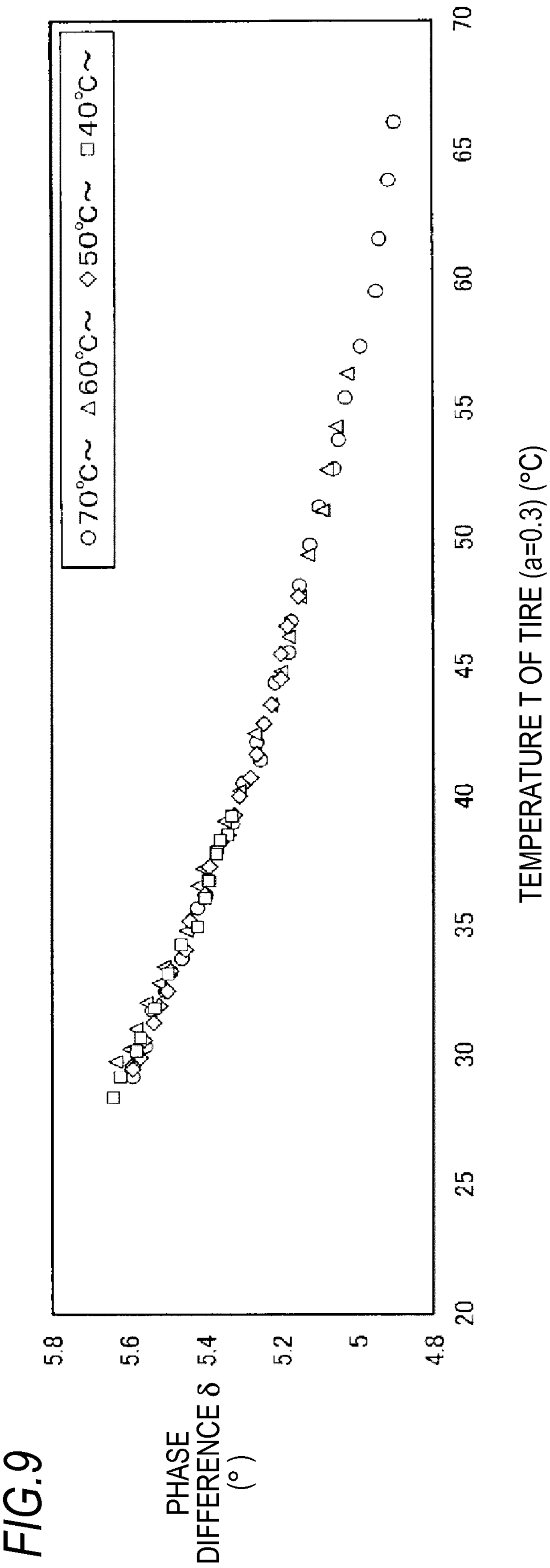
○70°C~ △60°C~ ◇50°C~ □40°C~
PHASE DIFFERENCE δ (°)
5.8
5.6
5.4
5.2
5
4.8
20
25
30
35
40
45
50
55
60
65
70
TEMPERATURE T OF TIRE (a=0.3) (°C)

FIG.10

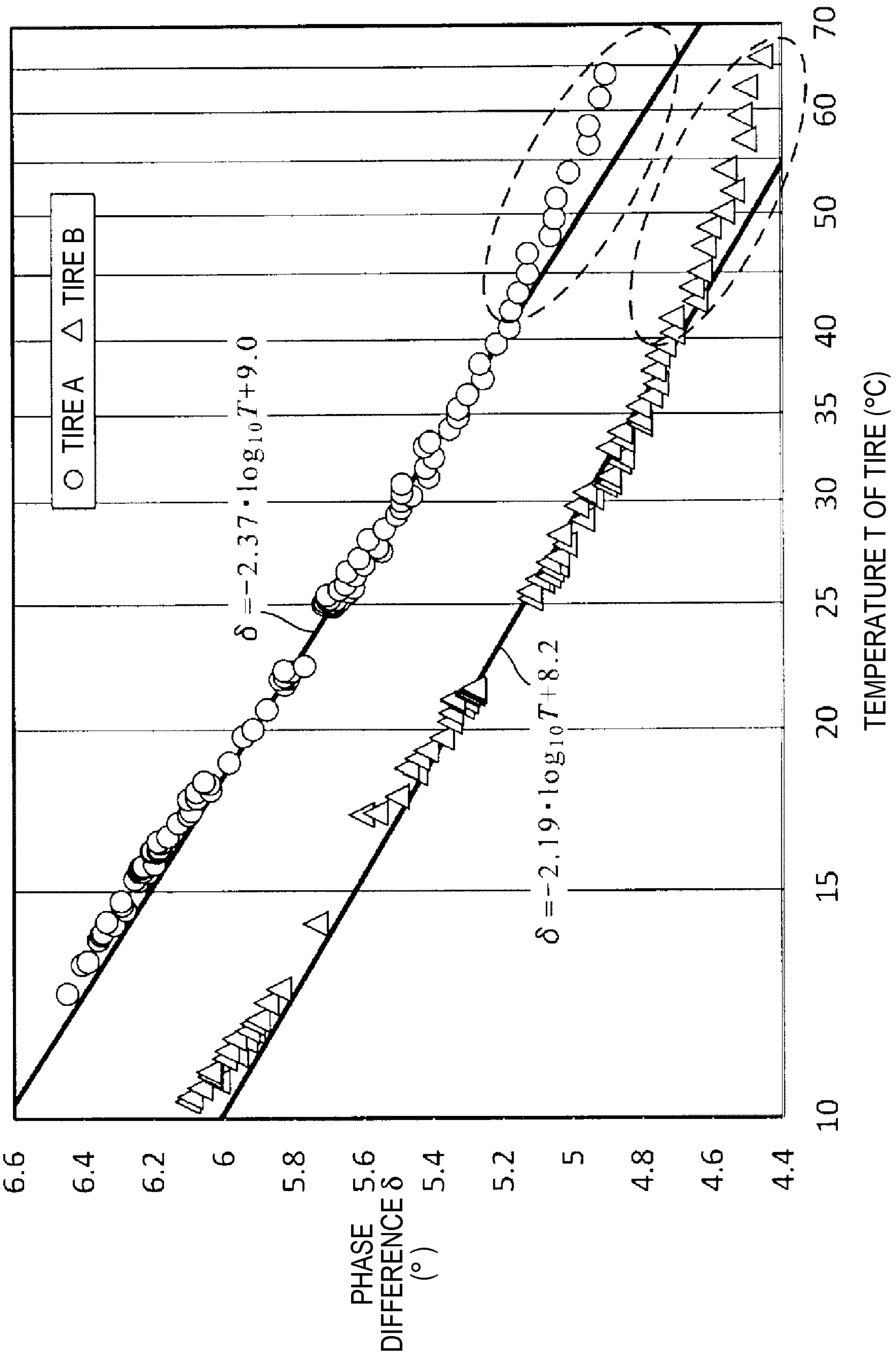
○ TIRE A △ TIRE B
δ = −2.37·log10T+9.0
δ = −2.19·log10T+8.2
PHASE DIFFERENCE δ (°)
6.6
6.4
6.2
6
5.8
5.6
5.4
5.2
5
4.8
4.6
4.4
10
15
20
25
30
35
40
50
60
70
TEMPERATURE T OF TIRE (°C)

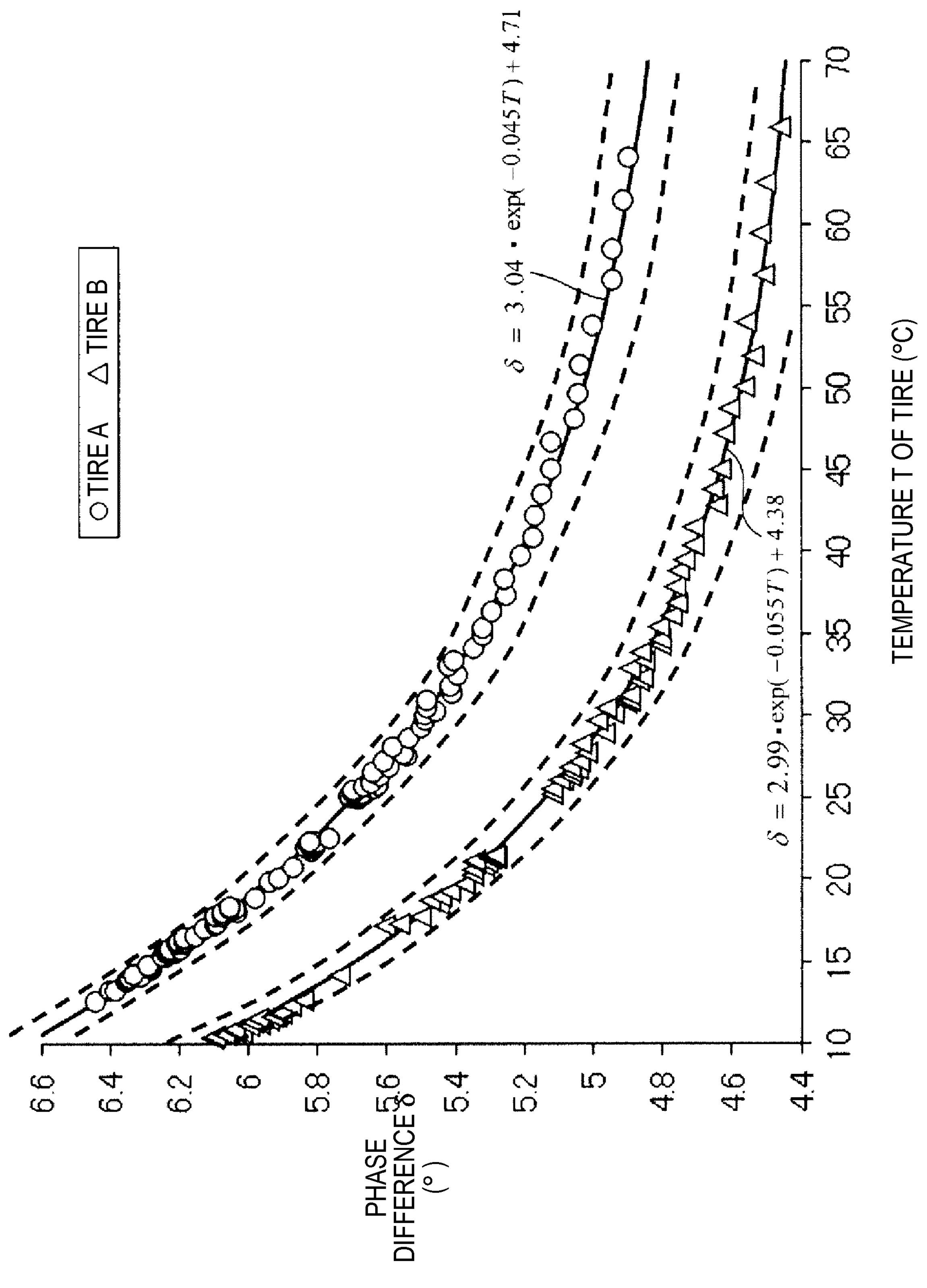
○TIRE A △TIRE B
δ = 3.04 • exp(−0.045T) + 4.71
δ = 2.99 • exp(−0.055T) + 4.38
PHASE DIFFERENCE δ (°)
6.6
6.4
6.2
6
5.8
5.6
5.4
5.2
5
4.8
4.6
4.4
10
15
20
25
30
35
40
45
50
55
60
65
70
TEMPERATURE T OF TIRE (°C)

FIG.11

**INTERNATIONAL SEARCH REPORT**

International application No.
PCT/JP2017/014720

A. CLASSIFICATION OF SUBJECT MATTER
*G01M17/02*(2006.01)i, *B60C19/00*(2006.01)i

According to International Patent Classification (IPC) or to both national classification and IPC

B. FIELDS SEARCHED

Minimum documentation searched (classification system followed by classification symbols)
G01M17/02, B60C19/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
JSTPlus/JMEDPlus/JST7580(JDreamIII), CiNii

C. DOCUMENTS CONSIDERED TO BE RELEVANT

| Category* | Citation of document, with indication, where appropriate, of the relevant passages | Relevant to claim No. |
|---|---|---|
| Y | WO 2015/174323 A1 (Kobe Steel, Ltd.), 19 November 2015 (19.11.2015), paragraphs [0022] to [0057]; fig. 1 to 5 & EP 3144660 A1 paragraphs [0027] to [0047]; fig. 1 to 5 & KR 10-2016-0147875 A & CN 106461509 A & TW 201612498 A | 1-14 |
| Y | Shunsuke NAKAMORI et al., "Concrete-sei Hyojun Yuka no Sumen ni Okeru Yuka Shogekion Level ni Ataeru Hendo Yoin ni Tsuite", Report of the 2010 Spring Meeting, the Acoustical Society of Japan CD-ROM, 2010.03, pages 1183 to 1186, particularly, page 1183, right column, line 19 to page 1184, left column, line 20 | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 June 2017 (01.06.17) | 13 June 2017 (13.06.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/014720

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-222656 A (The Yokohama Rubber Co., Ltd.), 01 October 2009 (01.10.2009), entire text; all drawings (Family: none) | 1-14 |
| A | JP 2007-218746 A (Bridgestone Corp.), 30 August 2007 (30.08.2007), entire text; all drawings (Family: none) | 1-14 |
| P,A | JP 2016-75503 A (Sumitomo Rubber Industries, Ltd.), 12 May 2016 (12.05.2016), entire text; all drawings (Family: none) | 1-14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015232545 A
- JP 2016082199 A